# EUROPEAN PATENT SPECIFICATION

(11) **EP 4 536 460 B1**
(45) Date of publication and mention of the grant of the patent: **22.04.2026**
(21) Application number: 23729771.8
(22) Date of filing: 01.06.2023
(51) Int. Cl.: B29C 33/40, A45D 40/16, B29C 33/50, B29C 33/38, B29C 33/56, B29C 39/02, B29C 45/16

(54) **DOUBLE-LAYER MOLD FOR MACHINES FOR PRODUCTION OF LIPSTICKS OR THE LIKE, AND RELATED MANUFACTURING PROCESS**
DOPPELLAGIGE FORM FÜR MASCHINEN ZUR HERSTELLUNG VON LIPPENSTIFTEN ODER DERGLEICHEN UND ZUGEHÖRIGES HERSTELLUNGSVERFAHREN
MOULE À DOUBLE COUCHE POUR MACHINES DE PRODUCTION DE BÂTONS DE ROUGE À LÈVRES OU ANALOGUES, ET PROCÉDÉ DE FABRICATION ASSOCIÉ

(30) Priority: 13.06.2022 IT 202200012437
(43) Date of publication of application: 16.04.2025
(73) Proprietor: Intercos S.p.A., 20123 Milano (IT)
(72) Inventor: LATTANZI, Giuseppe, 20812 Limbiate (IT); COTTONE, Christian, 20873 Cavenago di Brianza (MB) (IT)
(74) Representative: Mittler, Enrico
(86) International application number: PCT/EP2023/064638
(87) International publication number: WO 2023/241928

(56) References cited:
- EP-A1- 0 578 179
- EP-A1- 3 603 921
- WO-A1-2020/012250
- WO-A1-98/11194
- US-A- 5 200 173

## Description

"Double-layer mold for machines for production of lipsticks or the like, and related manufacturing process".

The present invention relates to a double-layer mold usable for machines for producing lipsticks or similar bar-shaped cosmetic products, and the related manufacturing process.

As known, the manufacture of lipsticks or similar cosmetic products provides the use of machines having cavities of thermally rigid and mechanically resistant material, each of which is internally lined with a hollow ogive-shaped mold of malleable plastic material with inner cavity of complementary shape to that desired for the outer surface of the lipstick. The introduction of an appropriate amount of cosmetic composition inside said cavity results in the formation of a lipstick (or similar cosmetic product) of the desired shape which, once cooled, is extracted from the mold.

Ogive-shaped molds are known for the aforesaid use, which are made of a silicone that has the dual need of being sufficiently rigid to withstand the mechanical stresses to which the mold is subjected during the production of the cosmetic product and at the same time flexible enough to allow the lateral enlargement or opening of the mold by means of the creation of a vacuum for the extraction of the cosmetic product therefrom.

Unfortunately, the standard silicone currently used for the manufacture of such molds is subject to mechanical wear even after a few filling cycles (also according to the ingredients comprised in the formula of the chemical filling composition) and this forces the lipstick manufacturers to replace the molds often to allow compliant productions and minimize production waste.

EP 0 578 179 A1, EP 3 603 921 A1, WO 2020/012250 A1, WO 98/11194 A1, and US 5 200 173 A concern moulds or coated tools used in the production of shaped cosmetic articles having elastomeric or silicone-based functional layers.

EP 0 578 179 A1 describes an elastic mould for manufacturing lipsticks comprising inner and outer elastomer layers, the outer containing reinforcing material and the inner optionally containing an oil-repellent agent. The mould may be produced by two-stage dip moulding.

EP 3 603 921 A1 discloses a mould tip made of polymeric or elastomeric material including silicone-based materials of defined hardness ranges

WO 2020/012250 A1 relates to forming an elastic lipstick mould using a core-and-cavity moulding process.

WO 98/11194 A1 discloses a metal die for soap bar pressing having a double-layer silicone coating, in which a first, harder layer is bonded to the metal substrate and a second, softer and thinner layer is bonded over it.

US 5 200 173 A concerns a lipstick mould provided with an anti-adhesion layer produced by gas-plasma glow-discharge treatment.

An object of the present invention was to make a mold of silicone material which was capable of fully satisfying the two above-mentioned requirements.

According to the present invention, such an object has been achieved by means of a mold characterized in that it is formed by two coaxial layers of different chemically linked silicones, of which an inner layer of smaller thickness in hard silicone and an outer layer of greater thickness in soft silicone.

With respect to traditional single-layer molds, the inner layer of the mold according to the invention increases the resistance of the mold to mechanical wear, improves the heat exchange and resistance to chemical agents present in the lipstick formula and also gives greater shine to the surface of the lipstick, while the outer layer makes it possible to open the mold by means of the traditional vacuum creation of existing machines.

For the manufacture of a double-layer mold according to the present invention, a process is advantageously envisaged which includes introducing a male element inside a first cavity so as to form a first space with shape and size corresponding to those of the inner layer of the mold being produced, introducing a first fluid silicone material inside said first space to form a mold inner layer, cooling said mold inner layer until it adheres to said male element, extracting said male element with adherent mold inner layer from said first cavity, introducing said male element with adhered mold inner layer inside a second cavity of greater size than said first cavity so as to form a second space with shape and size corresponding to those of the outer layer of the mold being manufactured, introducing a second fluid silicone material into said second space to form a mold outer layer chemically linked to said mold inner layer so as to form a double-layer mold, cooling said double-layer mold, extracting said male element from said double-layer mold while holding said double-layer mold inside said second cavity, and extracting said double-layer mold from said second cavity.

The features of the double-layer mold according to the present invention and of the related manufacturing process will be made more evident by the following detailed description of an embodiment thereof shown by way of non-limiting example in the accompanying drawings, in which:
figure 1 shows a double-layer mold in perspective view;
figure 2 shows the same mold in plan from above;
figure 3 shows the mold in axial section according to line III-III of figure 2;
figures 4 - 7 show a sequence of manufacturing steps of the double-layer mold.

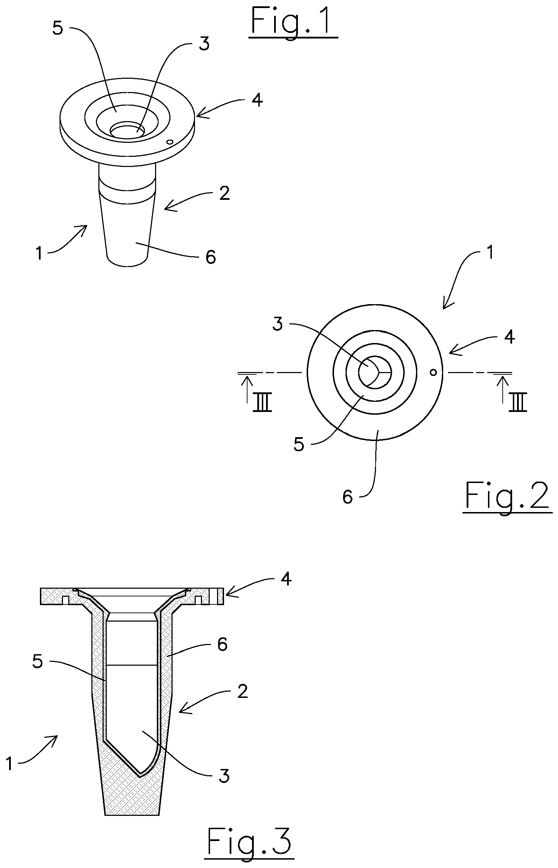

The double-layer ogive-shaped mold shown by way of example in figures 1-3, where it is indicated as a whole with the number 1, has a hollow main body 2 of approximately frustoconical outer shape with an inner cavity 3 which is open above and closed below, the shape of which corresponds to the outer shape of the lipstick or other cosmetic product for the production of which the mold 1 is intended. The main body 2 ends above with a flat flange 4.

As clearly highlighted in figure 3, the mold 1 is formed by a thin inner layer 5 of smaller thickness and by an outer layer 6 of greater thickness, chemically linked to each other. The thickness of the inner layer 5 can for example be 1 mm, while the thickness of the outer layer 6 can for example be 2 mm. The inner layer 5 is made of a hard and rigid silicone material (preferably with hardness ShA 20/25), while the outer layer 6 is made of a soft silicone material (preferably with hardness ShA 10/12).

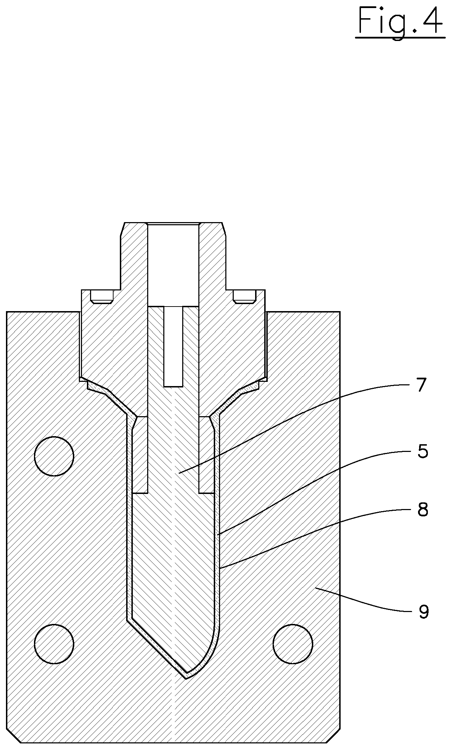

Advantageously, the manufacturing process of the mold 1 with inner layer 5 and outer layer 6 follows the modes shown in figures 4-7.

In particular, a male element 7 is introduced inside a cavity 8 of a mold 9 so as to define a space of shape and size equal to those desired for the inner layer 5 of the mold 1. A first suitable fluid silicone material is introduced inside such a space and then cooled so as to form a thin hard and rigid ogive-shaped layer 5 adhering to the male element 7 (figure 4).

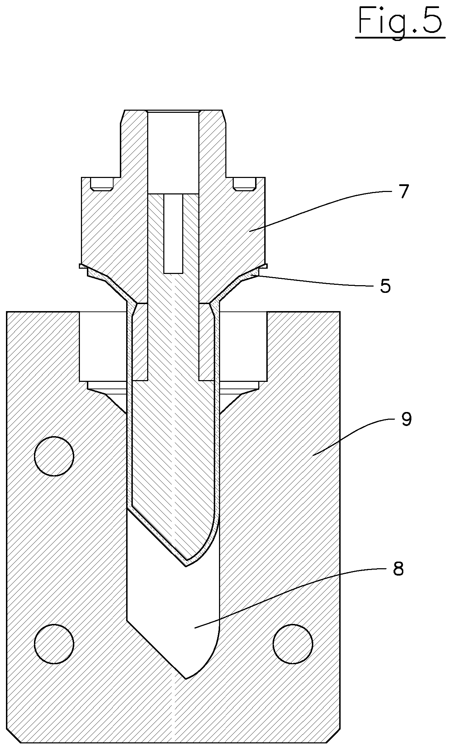

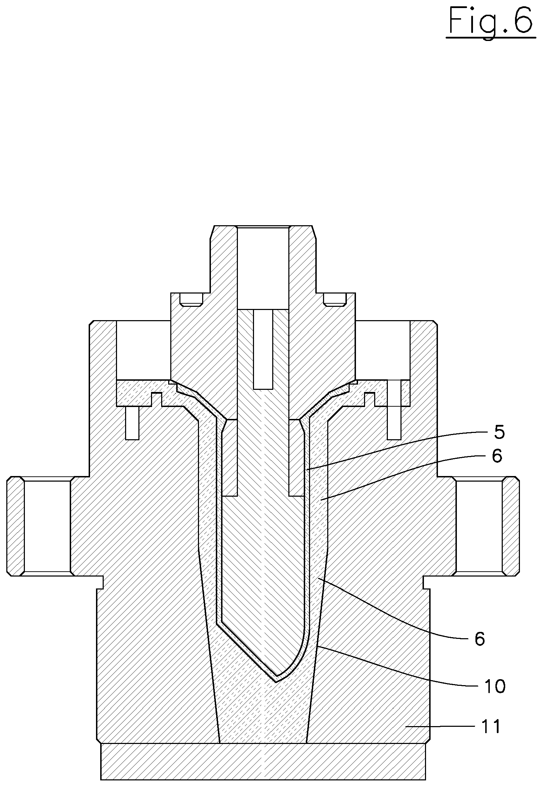

The male element 7 with adherent layer 5 is then extracted from the mold 8 (figure 5) and subsequently introduced together with the layer 5 inside a wider cavity 10 of a rigid mold 11 so as to define a second space of shape and size equal to those desired for the outer layer 6 of the mold 1. A second suitable fluid silicone material is introduced inside such a second space and then cooled so as to form a thick, soft, ogive-shaped layer 6 which is chemically linked to the layer 5 adhered to the male element 7 (figure 6).

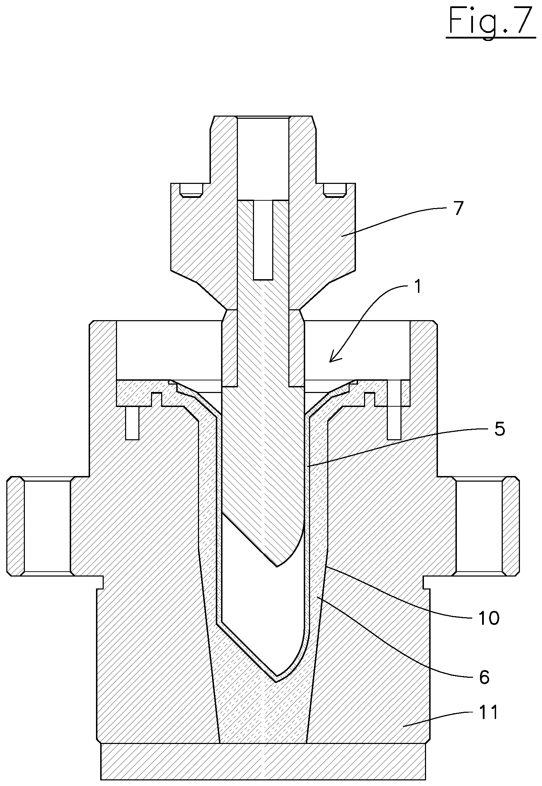

The male element 7 is then extracted from the rigid mold 11 where instead the two layers 5 and 6 (figure 7) remain, held by means of the formation of a pneumatic vacuum outside the cavity 10 (a technique in itself known in the machines of the field). Removing the vacuum, an ogive-shaped mold 1 with two coaxial layers 5 and 6 forming a single body, such as that of figures 1-3, can finally be extracted from the mold 11.

## Claims

1. Mold (1) for machines for production of lipsticks or similar bar-shaped cosmetic products, **characterized by** being formed by two coaxial layers (5, 6) of different chemically linked silicones, wherein an inner thinner layer (5) is made of hard silicone and an outer thicker layer (6) is made of soft silicone.

2. Process for manufacturing a mold (1) with two coaxial layers (5, 6) according to claim 1, comprising, in succession, introduction of a male element (7) into a first cavity (8) to form a first space with shape and size corresponding to those of the inner layer of the mold being manufactured, introduction of a first fluid silicone material into said first space to form a mold inner layer (5), cooling of said mold inner layer (5) until adhering to said male element (7), extraction of said male element (7) with adhered mold inner layer (5) from said first cavity (8), introduction of said male element (7) with adhered mold inner layer (5) into a second cavity (10) of greater size than said first cavity (8) to form a second space with shape and size corresponding to those of the outer layer of the mold being manufactured, introduction of a second fluid silicone material into said second space to form a mold outer layer (6) chemically linked to said mold inner layer (5) so as to constitute a mold (1) with double layer (5, 6), cooling of said mold (1) with double layer, extraction of sail male element (7) from said mold (1) with double layer while holding said mold (1) inside said second cavity (10), and extraction of said mold (1) with double layer (5, 6) from said second cavity (10).

## Patentansprüche

1. Form (1) für Maschinen zur Herstellung von Lippenstiften oder ähnlichen stabförmigen Kosmetikprodukten, **dadurch gekennzeichnet, dass** sie durch zwei koaxiale Schichten (5, 6) aus verschiedenen chemisch verknüpften Silikonen gebildet ist,
wobei eine innere dünnere Schicht (5) aus hartem Silikon hergestellt ist und eine äußere dickere Schicht (6) aus weichem Silikon hergestellt ist.

2. Verfahren zur Herstellung einer Form (1) mit zwei koaxialen Schichten (5, 6) gemäß Anspruch 1, umfassend, nacheinander, das Einführen eines männlichen Elements (7) in einen ersten Hohlraum (8), um einen ersten Raum mit einer Form und Größe zu bilden, die denen der inneren Schicht der hergestellten Form entsprechen,
Einführen eines ersten flüssigen Silikonmaterials in genannten ersten Raum, um eine innere Schicht der Form (5) zu bilden,
Abkühlen der genannten inneren Schicht der Form (5), bis sie an dem genannten männlichen Element (7) haftet,
Herausziehen des genannten männlichen Elements (7) mit angehafteter innerer Schicht der Form (5) aus dem genannten ersten Hohlraum (8),
Einführen des genannten männlichen Elements (7) mit angehafteter innerer Schicht der Form (5) in einen zweiten Hohlraum (10) mit größerer Größe als der genannte erste Hohlraum (8), um einen zweiten Raum mit Form und Größe zu bilden, die denen der äußeren Schicht der hergestellten Form entsprechen,
Einführen eines zweiten flüssigen Silikonmaterials in den genannten zweiten Raum, um eine äußere Schicht der Form (6) zu bilden, die chemisch mit der genannten inneren Schicht der Form (5) verknüpft ist, um eine Form (1) mit Doppelschicht (5, 6) zu erzeugen,
Abkühlen der genannten Form (1) mit Doppelschicht, Herausziehen des genannten männlichen Elements (7) aus der genannten Form (1) mit Doppelschicht, während die genannte Form (1) in dem genannten zweiten Hohlraum (10) gehalten wird, und Herausziehen der genannten Form (1) mit Doppelschicht (5, 6) aus dem genannten zweiten Hohlraum (10).

## Revendications

1. Moule (1) pour machines de production de rouges à lèvres ou produits cosmétiques analogues en forme de bâtonnet, **caractérisé par** le fait d'être formé par deux couches coaxiales (5, 6) de silicones différentes liées chimiquement, dans lequel une couche interne plus mince (5) est faite de silicone dure et une couche externe plus épaisse (6) est faite de silicone molle.

2. Procédé de fabrication d'un moule (1) ayant deux couches coaxiales (5, 6) selon la revendication 1, comprenant, successivement, l'introduction d'un élément mâle (7) dans une première cavité (8) pour former un premier espace ayant une forme et une taille correspondant à celles de la couche interne du moule en cours de fabrication, l'introduction d'un premier matériau de silicone fluide dans ledit premier espace pour former une couche interne de moule (5), le refroidissement de ladite couche interne de moule (5) jusqu'à adhérence audit élément mâle (7), l'extraction dudit élément mâle (7) avec la couche interne de moule ayant adhéré (5) hors de ladite première cavité (8), l'introduction dudit élément mâle (7) avec la couche interne de moule ayant adhéré (5) dans une deuxième cavité (10) de taille supérieure à ladite première cavité (8) pour former un deuxième espace ayant une forme et une taille correspondant à celles de la couche externe du moule en cours de fabrication, l'introduction d'un deuxième matériau de silicone fluide dans ledit deuxième espace pour former une couche externe de moule (6) liée chimiquement à ladite couche interne de moule (5) de manière à constituer un moule (1) ayant une double couche (5, 6), le refroidissement dudit moule (1) ayant une double couche, l'extraction dudit élément mâle (7) hors dudit moule (1) ayant une double couche tout en maintenant ledit moule (1) à l'intérieur de ladite deuxième cavité (10), et l'extraction dudit moule (1) ayant une double couche (5, 6) hors de ladite deuxième cavité (10).
